# EUROPÄISCHE PATENTSCHRIFT

(11) **EP 3 078 943 B1**
(45) Veröffentlichungstag und Bekanntmachung des Hinweises auf die Patenterteilung: **16.06.2021**
(21) Anmeldenummer: 15162633.0
(22) Anmeldetag: 07.04.2015
(51) Int. Cl.: G01F 25/00, G01F 23/00, G01F 23/26, G01F 23/296, G01N 27/02, G01N 9/00, G01N 9/24, G01N 29/02, G01N 9/36, G01N 29/07

(54) **MESSGERÄT UND VERFAHREN ZUR ERFASSUNG EINES FÜLLSTANDS EINES MEDIUMS**
MEASURING DEVICE AND METHOD FOR DETECTING A MEDIUM FILL LEVEL
DISPOSITIF DE DÉTECTION D'UN NIVEAU DE REMPLISSAGE

(43) Veröffentlichungstag der Anmeldung: 12.10.2016
(73) Patentinhaber: VEGA Grieshaber KG, 77709 Wolfach (DE)
(72) Erfinder: Dieterle, Levin, 77709 Wolfach (DE)
(74) Vertreter: Maiwald Patent- und Rechtsanwaltsgesellschaft mbH

(56) Entgegenhaltungen:
- EP-A1- 2 667 162
- DE-A1- 10 328 296
- DE-A1- 19 839 000
- DE-A1-102014 006 695
- DE-U1-202011 107 423

## Beschreibung

### Gebiet der Erfindung

Die Erfindung betrifft ein Messgerät zum Erfassen eines Füllstands oder eines Grenzstands eines Mediums, sowie ein Verfahren zum Erfassen eines Füllstands oder eines Grenzstands eines Mediums, ein Programmelement und ein computerlesbares Medium.

### Hintergrund

Füllstandsensoren werden beispielsweise eingesetzt, um die Füllhöhe oder den Pegel eines Mediums in einem Behälter zu messen. Dem Sensor stehen dabei im Regelfall nicht automatisch Informationen über physikalische Eigenschaften des Mediums zur Verfügung. Von Interesse können insbesondere die Permittivität oder die elektrische Leitfähigkeit sein. Die Permittivität, auch dielektrische Leitfähigkeit genannt, gibt die "Durchlässigkeit" eines Mediums für elektrische Felder an. Die elektrische Leitfähigkeit ist invers proportional zum elektrischen Widerstand.

Beim Betreiben einer Anlage mit einem Behälter, der ein Medium enthält, oder einem Fluidsensor in einer Kammer kann es jedoch vorkommen, dass eine bestimmte Menge des Mediums an dem Sensor anhaftet, obwohl der Pegel des Mediums unterhalb des Sensors liegt, der Sensor also nicht in das Medium eintaucht. In anderen Fällen kann bei einer Pegelabsenkung ein Teil des Mediums an der Behälterwand oder dem Gehäuse anhaften, hinter der sich der Füllstandsensor befindet. Dies kann insbesondere bei hochviskosen, also zähflüssigen Fluiden auftreten, die zudem auch noch adhäsive Eigenschaften aufweisen.

Diese Situationen können zu falschen Messungen oder Ungenauigkeiten führen. Ein Grund dafür ist, dass ein Sensor, der keine Informationen über die physikalischen Eigenschaften des zu vermessenden Mediums zur Verfügung hat, unter manchen Umständen nicht zwischen einer Anhaftung und einer vollständigen Bedeckung durch das Medium unterscheiden kann. Dies ist insbesondere dann der Fall, wenn der anhaftende Stoff sehr ausgeprägt diejenigen physikalischen Eigenschaften aufweist, auf die der Sensor aufgrund seines Messprinzips empfindlich reagiert (bspw. Medium mit hoher relativer Permittivität bei einem kapazitiven Sensor) und ein den Sensor vollständig bedeckendes Medium nur geringfügig diese physikalischen Eigenschaften aufweist.

Im Stand der Technik wird zur Lösung dieses Problems unter anderem ein passiver Schirm, insbesondere eine Schirmelektrode verwendet, um einen oberflächennahen Bereich, in dem sich eine Anhaftung befindet, aus dem Messbereich des Sensors weitestgehend auszublenden. Dies ist zum Beispiel in der US 3,706,980 A beschrieben.

Außerdem ist aus der DE 10 2005 027 344 A1 eine Unterscheidung von verschiedenen Medien mittels Impedanz-Spektroskopie bekannt, wobei eine Messung der Impedanz in Abhängigkeit der anregenden Frequenz durchgeführt wird. DE 198 39 000 A1 beschreibt ein Verfahren zur Überwachung von Füllständen sowie Füllstandmess- und Anzeigevorrichtungen mit mehreren übereinander angeordneten Sensoren, die außen auf einer Tankwand befestigt sind.

DE 103 28 296 A1 beschreibt ein Feldgerät zur Überwachung und Bestimmung einer Prozessgröße eines Mediums, beispielsweise eines Füllstandes, welche eine schwingfähige Einheit aufweist, deren Schwingfrequenz auswertbar ist.

DE 20 2011 107 423 U1 beschreibt eine Vorrichtung zur Detektion von Schaum in einem Behälter mit einer Sensorelektrode, einer Schutzelektrode und einer Elektronikeinheit.

DE 10 2014 006 695 A1 beschreibt einen Füllstandsensor zur Messung des Füllstands und Verfahren zur Bestimmung des Füllstands einer Flüssigkeit. Der Füllstandsensor weist eine Vielzahl von übereinander entlang einer Messtrecke angeordneten kapazitiven Sensoren auf.

### Zusammenfassung der Erfindung

Es ist die Aufgabe der Erfindung, Fehlmessungen bzw. falsche Schaltentscheidungen aufgrund von Anhaftungen eines Mediums zu verhindern.

Diese Aufgabe wird durch die Merkmale der unabhängigen Ansprüche gelöst. Weiterbildungen der Erfindung ergeben sich aus den Unteransprüchen und der nachfolgenden Beschreibung.

Ein erster Aspekt betrifft ein Messgerät zum Erfassen eines Füllstands oder eines Grenzstands eines Mediums, aufweisend eine Sensoreinheit, die ausgeführt ist, mindestens zwei Messungen in zwei voneinander verschiedenen Eindringtiefen im Medium durchzuführen, und eine Recheneinheit, die ausgeführt ist, mit den Ergebnissen der mindestens zwei Messungen eine vollständige Bedeckung der Sensoreinheit durch ein Medium von einer Anhaftung von Teilen des Mediums an der Sensoreinheit zu unterscheiden. Vorzugsweise vermisst die eine Messung einen Bereich nahe der Sensoroberfläche, welche stark durch ein anhaftendes Medium beeinflusst wird. Bei der anderen handelt es sich um eine Messung, welche einen Volumenbereich vermisst, welcher sich tiefer in den Raum vor der Sensoroberfläche erstreckt.

Medien sind beispielsweise Fluide, wie Flüssigkeiten oder Gas/Flüssigkeiten-Mischformen, wie überkritische Fluide. Das Medium kann auch aus Stoffgemischen wie Suspensionen, Schäumen, Gemengen, Emulsionen bestehen. Es sind aber auch Schüttgüter denkbar. Es ist die Aufgabe des Messgeräts, diese Medien zu erfassen, um einen Füllstand oder Grenzstand zu detektieren. Insbesondere kann das Messgerät die Anwesenheit des Mediums und/oder den Grad der Bedeckung, beispielsweise einen Füllstand, erfassen. Es ist auch denkbar, dass sich das Messgerät in einer mehrfach offenen oder halboffenen Kammer befindet und das Messgerät ein Medium in diesem erfasst. Ein Beispiel für eine mehrfach offene Kammer ist ein Rohr, in dem die Anwesenheit eines Fluids zu detektieren ist.

Eine vollständige Bedeckung der Sensoreinheit durch ein Medium unterscheidet sich dadurch von einer Anhaftung von Teilen des Mediums, dass bei einer vollständigen Bedeckung der Sensoreinheit die Sensoreinheit in das Medium eingetaucht ist. In anderen Worten liegt bei einer vollständigen Bedeckung der Sensoreinheit durch ein Medium der Pegel des Mediums oberhalb der Sensoreinheit. Dagegen bedeutet eine Anhaftung von Teilen des Mediums, dass Reste des Mediums an der Sensoreinheit anhaften, obwohl der Pegel des Mediums unter der Sensoreinheit liegt. Dies kann zum Beispiel auftreten, wenn das Medium zumindest in Teilen aus dem Behälter abgelassen wird.

Gerade dann, wenn das Medium aus einem flüssigen oder zähflüssigen Stoff besteht, hat es oftmals adhäsive Eigenschaften. Das heißt, dass es am Sensor oder an einer Fläche, hinter der sich der Sensor befindet, anhaften kann, obwohl der Großteil des Mediums sich bereits zurückgezogen hat. Ein Beispiel dafür ist ein Behälter mit sinkendem Pegelstand einer Flüssigkeit, die an einer Behälterwand, oder einer Fläche, hinter der sich das Messgerät befindet, oder an dem Sensor selbst anhaftet.

Ebenso können auch feuchte und/oder klebrige Schüttgüter, wie beispielsweise Sand, Salz, Tierfutter (trocken/feucht) oder Müsli, Anhaftungen an Behälterwand und Sensorfläche hinterlassen.

Begünstigt wird dieser Effekt durch hochviskose, also sehr zähflüssige Fluide. Diese benetzen dann eine Fläche unmittelbar vor der Sensoreinheit, und werden somit durch den Sensor erfasst. Unter anderem in diesem Zustand führt die Sensoreinheit mindestens zwei Messungen durch. Diese können zwei Messungen in jeweils unterschiedlichen Tiefen des den Sensor umgebenden Mediums sein, oder auch mehr als zwei Messungen sein, wobei auch dann mindestens zwei Tiefen zu erfassen sind. Der Grund hierfür liegt darin, dass die zu lösenden Gleichungen mindestens zwei Unbekannte aufweisen. Zum einen sind diese von mindestens einer physikalischen Materialeigenschaft, zum anderen von der Bedeckungsdicke des Sensors mit Medium abhängig. Werden Messkurven ermittelt, so fallen diese unterschiedlich je nach Bedeckungsdicke der Sensoreinheit mit dem Medium und je nach dessen physikalischen Eigenschaften aus. Die Sensoreinheit kann nun zur Optimierung seiner Funktion auf ein Medium vorkalibriert sein. Wechselt das Medium, und damit die physikalischen Materialeigenschaften, werden im Regelfall andere Messkurven erhalten, die dann (bei nur einer Messung) auf falsche Bedeckungsschichtdicken schließen lassen würden. Zu diesem Zweck werden bei der vorgeschlagenen Sensoreinheit mindestens zwei Messungen in unterschiedliche Tiefen des Mediums vorgenommen. Dies liefert mindestens zwei Messwerte, die in die Gleichungen zur Bestimmung der Schichtdicke und der mindestens einen physikalischen Mediumeigenschaft eingesetzt werden können. Aus diesen von der Recheneinheit berechneten Informationen kann nun darauf geschlossen werden, ob an der Sensoreinheit oder einer Fläche vor der Sensoreinheit ganz oder partiell Reste des Mediums anhaften und sich der Rest des Mediums aus dem zu erfassenden Behälter oder Kammer bereits zumindest teilweise zurückgezogen hat, oder ob der Sensor oder die Fläche vor dem Sensor vollständig durch das Fluid bedeckt ist. Dies verhindert eine Verwechslung von einerseits: Anhaftungen mit Medien, deren physikalische Eigenschaften stark ausgeprägt (bspw. hohe relative Permittivität) sind; und andererseits: Vollständige Bedeckungen der Sensoreinheit oder der Fläche vor der Sensoreinheit mit dem Medium, das vollständig bis zu der Sensoreinheit oder der Fläche vor der Sensoreinheit reicht.

Es mag eine vorteilhafte Wirkung der Erfindung sein, dass das Füllstandmessgerät die physikalischen Eigenschaften des Mediums bei jeder Messung bestimmt, oder in anderen Worten, dass eine Eingabe in das Gerät über die Art des zu vermessenden Mediums oder die Größen bestimmter physikalischen Eigenschaften des Mediums, wie Permittivität oder elektrische Leitfähigkeit, seitens des Anwenders entfällt. Zudem können auch Messungen zuverlässiger durchgeführt werden, auch dann wenn eine bestimmte Menge des Füllguts an einem Sensor oder an einer Behälterwand oder einer anderen Fläche anhaftet, oder sie sogar ganz bedeckt. Zusätzlich kann ein Schaltpunkt eines Grenzstandsensors der Messvorrichtung bestimmt werden, ohne dabei die physikalischen Stoffeigenschaften des zu vermessenden Mediums berücksichtigen zu müssen. Dies kann eine schnellere Reaktion auf den Grad der Bedeckung eines Sensors und auf die Änderung eines Schaltzustands eines Grenzstandsensors zulassen. Es kann auch vorgesehen sein, dass das beschriebene Messgerät durch Messung mindestens einer physikalischen Medieneigenschaft (unter der Annahme, dass sich das vermessene Medium nicht geändert hat) eine Temperaturkompensation durchführt, da Temperaturänderungen zu Veränderungen der der physikalischen Medieneigenschaften führen und somit die jeweiligen Messkurven verändern können.

Gemäß einer Ausführungsform der Erfindung ist die Recheneinheit weiterhin ausgeführt, durch Auswertung der mindestens zwei Messungen physikalische Stoffeigenschaften zu bestimmen. Primär ist die Recheneinheit ausgeführt, Bedeckungsdicken zu ermitteln. Dazu kann beispielsweise ein physikalischer Parameter aus dem zu lösenden Gleichungssystem eliminiert werden, ohne diesen explizit zu berechnen. Dieser kann aber auch berechnet werden und zum Beispiel für weitere Anwendungen auf einer Speichereinheit gespeichert werden. Dieser kann auch mittels einer Sende- und Empfangseinheit an eine zentrale Auswertestelle übermittelt werden, zum Beispiel in sicherheitskritischen Anlagen zur Verifikation des Mediums, oder der jeweiligen Mediumparameter.

Gemäß einer weiteren Ausführungsform weist das Messgerät weiterhin einen passiven Schirm auf, der ausgeführt ist, die Anhaftung aus dem vom ersten Sensorelement überwachten Volumenbereich weitestgehend auszublenden und der zusätzlich ausgeführt ist, den Einfluss des bedeckenden und/oder anhaftenden Mediums als zweites Sensorelement zu detektieren und über die Recheneinheit aktiv auszuwerten.

Gemäß einer weiteren Ausführungsform ist der Schirm eine Schirmelektrode, welche dazu dient, die Messung im Falle einer Impedanz-Messung zu verbessern und ungewollte oberflächennahe Bereiche aus dem von der ersten Messelektrode überwachten Volumenbereich weitestgehend auszublenden und die zusätzlich ausgeführt ist, den Einfluss des bedeckenden und/oder anhaftenden Mediums als zweite Elektrode zu detektieren und über die Recheneinheit aktiv auszuwerten.

Gemäß einer weiteren Ausführungsform der Erfindung weist das Messgerät neben den mindestens zwei Sensorelementen weiterhin einen passiven Schirm auf, der ausgeführt ist, den von den jeweiligen Sensorelementen überwachten Volumenbereich weitestgehend auf den vor der Sensoroberfläche befindlichen Bereich, sprich den durch das Medium beeinflussten Bereich zu beschränken. Somit können konstruktionsbedingte Einflüsse aufgrund der Geometrie des Sensoraufbaus auf das Messergebnis minimiert werden. Dabei kann der passive Schirm zusätzlich zu den Sensorelementen vorhanden sein, oder aber mindestens ein Sensorelement kann selbst als passiver Schirm ausgeführt sein, bzw. benutzt werden. Im letzteren Fall dient ein Sensorelement als Schirmelement für ein anderes Sensorelement.

Gemäß einer weiteren Ausführungsform der Erfindung ist der Schirm eine Schirmelektrode, welche dazu dient, die Messung im Falle einer Impedanz-Messung zu verbessern und ungewollte Bereiche aus dem von den mindestens zwei Messelektroden überwachten Volumenbereich weitestgehend auszublenden. Durch einen passenden geometrischen Aufbau lässt sich der Messbereich dieser beiden Elektroden dermaßen auslegen, dass diese Elektroden einen Messbereich aufweisen, in welchem sie sich jeweils in ihrer Messtiefe voneinander unterscheiden. Durch Auswertung der Impedanz der Schirmelektrode durch die Recheneinheit kann die Schirmelektrode die Rolle der zweiten Messelektrode für die zweite Messung übernehmen.

Gemäß einer weiteren Ausführungsform der Erfindung ist das Messgerät ein Grenzstandmessgerät, das ausgeführt ist, einen der Zustände "mit Medium bedeckt" und "mit Medium unbedeckt" zu ermitteln. Ein Grenzstandmessgerät erfasst den Pegel oder den Stand des Mediums bezüglich eines Vergleichswertes. Je nachdem, ob der Pegel die vordefinierte Grenze über- oder unterschreitet, sendet das Grenzstandmessgerät ein entsprechendes Signal ab. Beispielsweise sendet das Grenzstandmessgerät das Signal "Grenzstand überschritten" bei Überschreiten eines Mediumpegels über den höchstzulässigen Behälterstand an eine zentrale Recheneinheit oder einen Kontrollraum aus. Auch dafür ist es wichtig, den Bedeckungsgrad der Sensoreinheit korrekt zu erfassen.

Gemäß einer weiteren Ausführungsform der Erfindung ist das Messgerät ein Füllstandmessgerät, das ausgeführt ist, die Höhe eines Füllgutes oder den Pegel eines Fluids in einem Behälter zu erfassen. In diesem Fall kann das Messgerät nicht nur die binäre Information "überschritten" oder "nicht überschritten" liefern, sondern einen numerischen Wert zum Beispiel eines Füllstands eines Mediums in einem Behältnis.

Gemäß einer weiteren Ausführungsform der Erfindung ist die zu erfassende pysikalische Mediumeigenschaft mindestens eines aus Dichte des Mediums und Permittivität des Mediums. Die Dichte eines Mediums ist definiert durch das Verhältnis aus Masse und dem dazugehörigen Volumen. Die Permittivität, oder dielektrische Leitfähigkeit genannt, gibt die Durchlässigkeit eines Materials für elektrische Felder an. Zum Beispiel kann die relative Permittivität des Mediums von Interesse sein, die das Verhältnis der Permittivität des Mediums zu der allgemeinen Permittivität des Vakuums ist.

Gemäß einer weiteren Ausführungsform der Erfindung weist die Sensoreinheit zwei Elektroden auf, wobei die erste Elektrode zur Durchführung der ersten Messung verwendet wird und die zweite Elektrode zur Durchführung der zweiten Messung verwendet wird. Solche Elektroden eigenen sich insbesondere für Impedanzmessungen, wobei die Impedanz das Wechselstromäquivalent des elektrischen Widerstands gegen Gleichstrom ist. Die Impedanz kennzeichnet sozusagen einen Wechselstromwiderstand, wobei Phaseninformation enthalten ist. Es können aber auch andere Sensorelemente verwendet werden, nämlich solche, die sich durch ihre geometrischen Abmessung oder deren bauliche Ausführung eignen, Messungen in unterschiedlicher Tiefe gemessen von der Sensoroberfläche im Medium vorzunehmen.

Gemäß einer weiteren Ausführungsform der Erfindung ist das Messgerät als Vibrationsgrenzstandmessgerät ausgeführt. Ein solches Gerät erzeugt Vibrationen in einem Aktuator. Die emittierten Schwingungen verbreiten sich dann über die örtlich vorkommenden Medien und werden beispielsweise von einem Reflektor zurückgeworfen. Anschließend wird von einem Sensor die zurückgelegte Laufzeit ermittelt. Um der Problematik von teilweise anhaftenden Medien zu entgegnen, können auch zwei Reflektoren in verschiedenen Abständen vorgesehen sein. Bestimmte Größen müssen der Sensorelektronik bekannt sein, wie zum Beispiel die Entfernung von der Quelle der Schwingung über den Reflektor bis zum Sensor. Beispielsweise unter der Annahme von konstanter Bedeckungsdicke kann so die Bedeckungsdicke ermittelt werden.

Gemäß einer weiteren Ausführungsform der Erfindung sind die erste Elektrode und die zweite Elektrode rotationssymmetrisch auf der Sensoreinheit angeordnet und beide sind von einer Isolationsschicht umgeben.

Gemäß einem weiteren Aspekt ist ein Verfahren zum Erfassen von Medien angegeben, aufweisend die Schritte:
- Durchführen von mindestens zwei Messungen in mindestens zwei voneinander verschiedenen Eindringtiefen im Medium durch eine Sensoreinheit, und
- Entscheiden, ob eine vollständige Bedeckung der Sensoreinheit durch ein Medium oder eine Anhaftung von Teilen des Mediums an der Sensoreinheit vorliegt.

Gemäß einer weiteren Ausführungsform der Erfindung weist das beschriebene Verfahren weiterhin den Schritt auf:
- Bestimmen von einer oder mehreren physikalischen Stoffeigenschaften des Mediums durch die Recheneinheit.

Gemäß einem weiteren Aspekt der Erfindung ist ein Programmelement angegeben, das, wenn es auf der Recheneinheit ausgeführt wird, das Messgerät anleitet, das beschriebene Verfahren auszuführen.

Gemäß einem weiteren Aspekt der Erfindung ist ein computerlesbares Medium angegeben, auf dem das Programmelement gespeichert ist.

Im Folgenden werden Ausführungsbeispiele der Erfindung unter Bezugnahme auf die Figuren beschrieben. Darin bezeichnen gleiche Bezugszeichen gleiche oder ähnliche Elemente. Gleiche oder ähnliche Elemente können aber auch durch unterschiedliche Bezugszeichen bezeichnet sein.

### Kurze Beschreibung der Figuren

Fig. 1 zeigt ein Messgerät und zwei Messbereiche in unterschiedlichen Tiefen gemäß einem Ausführungsbeispiel der Erfindung.
Fig. 2 zeigt zwei unterschiedliche Messkurven gemäß einem weiteren Ausführungsbeispiel der Erfindung.
Fig. 3 zeigt ein Messgerät mit Elektroden und einer Isolationsschicht in einem Gehäuse gemäß einem weiteren Ausführungsbeispiel der Erfindung.
Fig. 4 zeigt eine Sensoreinheit mit Ultraschallmessung zum Ermitteln von Schalllaufzeiten gemäß einem weiteren Ausführungsbeispiel der Erfindung.
Fig. 5 zeigt ein Verfahren zum Erfassen von Medien gemäß einem weiteren Ausführungsbeispiel der Erfindung.

### Detaillierte Beschreibung von Ausführungsbeispielen

Die Darstellungen in den Figuren sind schematisch und nicht maßstäblich.

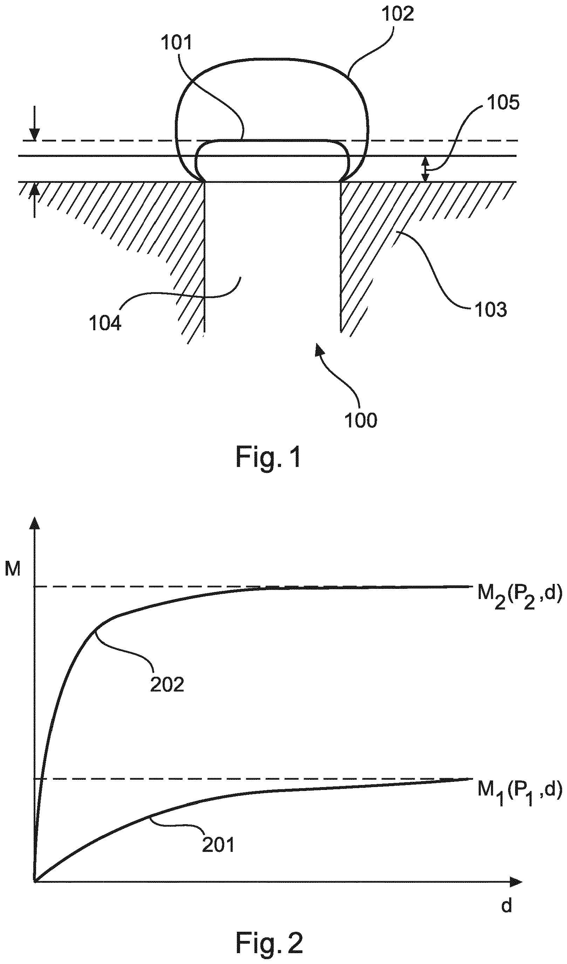

Fig. 1 zeigt ein Ausführungsbeispiel eines Messgeräts 100 zum Erfassen von Medien, insbesondere eines Grenzstandmessgeräts, mit einer Sensoreinheit 104. Dieses Messgerät 100 ist ausgeführt, eine von der Größe der physikalischen Stoffeigenschaft weitgehend unabhängige und gleichbleibende Schaltentscheidung zu treffen, ob der Grenzstand erreicht ist, wobei eine Benutzereingabe zu den physikalischen Stoffeigenschaften überflüssig ist. Diese Schaltentscheidung ist dann lediglich von der voreingestellten Bedeckungsdicke 105 abhängig. Dies wird dadurch erreicht, dass durch den im Behälter 103 installierten Sensor 104 zumindest zwei Messungen (die Trennung der Messungen kann beispielsweise zeitlich oder räumlich sein) durchgeführt werden. Durch die erste Messung wird ein oberflächennaher Bereich 101 und durch die andere ein in einem in der Tiefe ausgedehnteren Volumenbereich 102 ausgewertet.

Fig. 2 zeigt zwei unterschiedliche Messkurven, die für verschiedene Stoffeigenschaften bei gleicher Bedeckungsdicke erhalten werden. Solche Kurven unterscheiden sich jedoch grundsätzlich auch mit unterschiedlichen Bedeckungsdicken bei gleichbleibenden Stoffeigenschaften. Dies kann auch in einem Gleichungssystem mit zwei Unbekannten dargestellt werden. Zur Lösung dieses Gleichungssystems bedarf es also mindestens zweier nicht äquivalenter Gleichungen, und damit zweier Messungen, die in diese Gleichungen eingefügt werden. Der Messwert Mᵢ(Pᵢ,d) einer Messung hängt also zum einen von der zu messenden und zunächst nicht bekannten Größe der physikalischen Stoffeigenschaft Pᵢ, zum anderen von der Bedeckungsdicke d des Sensors mit dem Medium ab. Je nach Ausprägung der physikalischen Stoffeigenschaft des Mediums kann die gezeigte Kurve steiler und zu größeren Endwerten oder flacher und zu geringeren Endwerten mit der Bedeckungsdicke verlaufen. Zudem mag der Kurvenverlauf auch von der Art der detektierten physikalischen Stoffeigenschaft, beispielsweise der Permittivität oder der Stoffdichte, abhängig sein. Auch mag der bei einem Medium maximal mögliche Messwert bei vollständiger Bedeckung des Sensors mit Medium mit der Art der detektierten physikalischen Stoffeigenschaft variieren. Durch diese Abhängigkeit lässt sich daher über eine Einzelmessung weder Pᵢ noch d bestimmen, da das zugrunde liegende Gleichungssystem unterbestimmt ist. Werden zwei Messungen mit den Ergebnissen M₁(P₁,d) 201 und M₂(P₂,d) 202 durchgeführt und beide Messungen bestimmen dieselbe physikalischen Stoffeigenschaft P₁ = P₂, dann ist das Gleichungssystem eindeutig lösbar und eine Bestimmung von P₁ und d ist möglich, vorausgesetzt, die vom Sensor 104 erfassten Volumina Vᵢ 101 und 102 unterscheiden sich in ihrer Tiefe. Messung 1 im Volumen V₁ ergibt das Ergebnis M₁(P₁,d) und Messung 2 im Volumen V₂ ergibt das Ergebnis M₂(P₂,d). Genauer gesagt bedeutet dies, dass die eine Messung im oberflächennahen Bereich im Volumen V₁ 101 und die andere in einem in die Tiefe ausgedehnteren Volumenbereich V₂ 102 sensitiv ist. Oberflächennah bedeutet, dass es einen Grenzabstand d_{G} der Bedeckungsdicke des Sensors gibt, bei dem der oberflächennahe Bereich des Sensors bei einer Zunahme der Bedeckungsdicke keine Messwertänderung mehr zeigt und dieser Grenzabstand kleiner ist als der des zweiten Sensorelementes. Dabei mag das Volumen V₂ das Volumen V₁ beinhalten. Des Weiteren kann der Übergang zwischen dem oberflächennahen Bereich V₁ und dem volumensensitiven Bereich V₂ in Abhängigkeit des verwendeten Messprinzips kontinuierlich oder abrupt sein, je nach verwendetem Messprinzip. Für die Detektion der Bedeckung mit Medium bzw. für die Bewertung, ob ein Grenzstand erreicht ist, mag der relative Vergleich der beiden Messungen ausreichend und eine explizite absolute Berechnung von P und d nicht notwendig sein. Sind hingegen beide Messungen auf zwei unterschiedliche physikalische Parameter P₁ ≠ P₂ sensitiv (beispielsweise relative Permittivität und Dichte) ist das zu lösende Gleichungssystem im Allgemeinen weiterhin unterbestimmt, da kein allgemein gültiger Zusammenhang zwischen physikalischen Medieneigenschaften besteht (beispielsweise zwischen relativer Permittivität und Dichte oder Viskosität). Bei dem verwendeten Messprinzip mag es sich beispielsweise um eine Impedanzmessung mittels zweier Elektroden in Abhängigkeit von der Frequenz handeln (Impedanz-Spektroskopie). Es können aber auch andere Messprinzipien angewendet werden, beispielsweise Vibrationsmessungen.

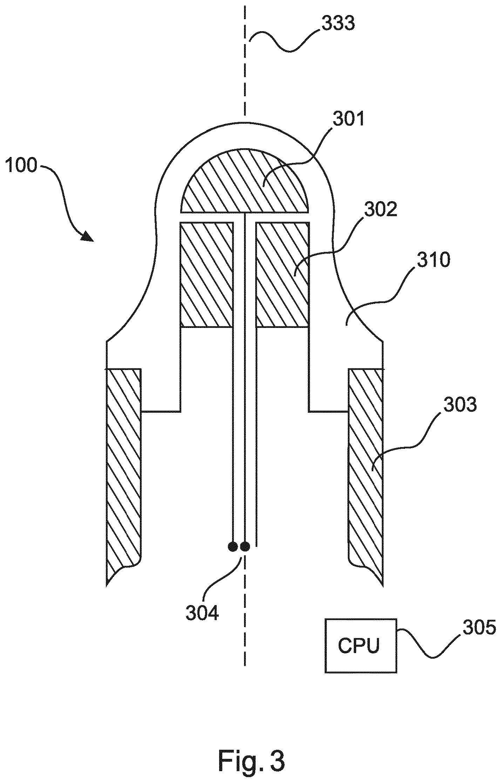

Fig. 3 zeigt ein weiteres Ausführungsbeispiel eines Messgeräts 100 zum Erfassen von Medien, insbesondere zum Erfassen der Bedeckung des Sensors mit Füllgut. Weiterhin kann auch auf Stoffeigenschaften des Füllguts geschlossen werden, wie beispielsweise der Permittivität (oder der Dichte). In diesem Beispiel erfolgt die Messung der Impedanz der Elektroden 301, 302 vorzugsweise im Frequenzbereich 10 - 400 MHz. Die Elektroden 301, 302 seien über den Anschluss 304 an eine Energieversorgung angeschlossen. Die Elektroden 301, 302 sind außerdem von einer Isolationsschicht 310, beispielsweise aus Polyetheretherketon oder Polytetrafluorethylen, relativ zur Bezugsmasse des Gehäuses 303 bzw. Behälterwand 103, umgeben. In diesem Beispiel ist der passive Schirm eine Schirmelektrode, wobei die Elektrode 302 als solche verwendet wird. Besitzen beide Elektroden 301, 302 die gleiche Polarität, verhindert die Schirmelektrode 302 die Ausprägung oberflächennaher Feldlinien der Elektrode 301 zum Gehäuse 303. Somit geht das von der Elektrode 301 mittels Impedanzspektroskopie erfasste Volumen deutlich tiefer in das Medium als das der Elektrode 302 erfasste Volumen. Zwar liefert bereits eine rein passive Schirmelektrode schon eine deutliche Minimierung des Einflusses der Anhaftung, jedoch kann im Falle von massiven Anhaftungen im Bereich der Messelektrode eine aktive Auswertung der Impedanz der Schirmelektrode als zweite Messung deutliche Vorteile bringen. Durch Vergleich der beiden ImpedanzMessungen der beiden Elektroden lässt sich die relative Permittivität des Mediums zumindest relativ bestimmen und somit einen von der Größe der physikalischen Stoffeigenschaft des Mediums weitestgehend unabhängigen Schaltpunkt für einen Grenzstandsensor angeben. Dieser Schaltpunkt ist dann lediglich noch von einer im Sensor eingestellten Bedeckungsdicke abhängig. Der gezeigte Sensorkopf ist rotationssymmetrisch um die Achse 333. Für das Ausführungsbeispiel ist es jedoch weitestgehend irrelevant, wie die beiden Elektroden 301, 302 und das Bezugselement geometrisch ausgebildet sind. Wichtig ist nur, dass das zu messende Medium die Impedanz zwischen den Elektroden 301, 302 und der Bezugsmasse beeinflusst und die von den Elektroden erfassten Volumina sich in ihrer Tiefe unterscheiden. Berechnungen werden von der Recheneinheit 305 durchgeführt. Auch die Entscheidung zum Schaltpunkt eines Grenzstandsensors findet in der Recheneinheit 305 statt.

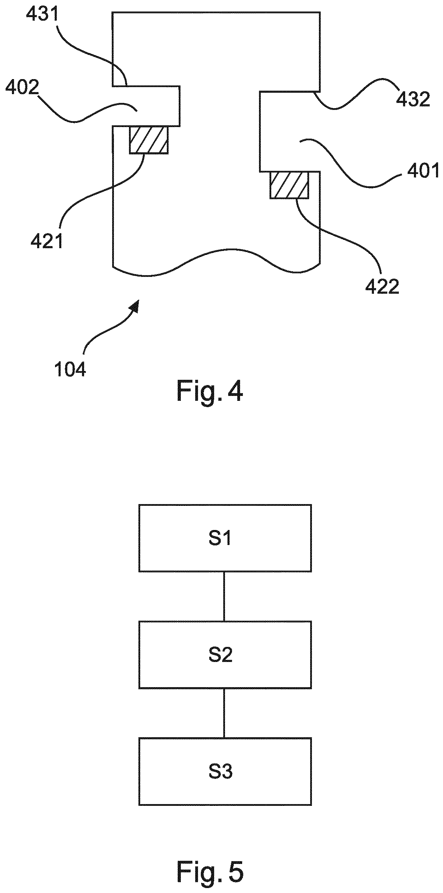

Fig. 4 zeigt ein Beispiel eines Messprinzips mit Schallsensoren. Die Sensoreinheit 104 weist dabei kombinierte Schallquellen und -empfänger 421, 422 auf. Diese können beispielsweise durch einen Aktuator Vibrationen erzeugen, die dann an einem ersten Reflektor 431 und auf einem zweiten Reflektor 432 zurückgeworfen werden. Der Weg "Schallquelle 421 -Reflektor 431 - Sensor 421" ist in diesem Beispiel kürzer als der Weg "Schallquelle 422 - Reflektor 432 - Sensor 422". Das heißt, dass sich unterschiedliche Laufzeiten von der Quelle über den jeweiligen Reflektor bis zum jeweiligen Sensor ergeben. Wäre keine Anhaftung von Teilen des Mediums an den Sensoren 421 und 422, würde eine einzige Messung von den Schallquellen 421 und 422 über einen einzigen Reflektor 432 auf einen einzigen Sensor 422 genügen, um die Schallgeschwindigkeit des Mediums, in das der Spalt 401 eingetaucht ist, zu bestimmen. Ist jedoch die Sensoreinheit 104 nur teilweise von dem Medium bedeckt, sind zwei verschiedene Medien in den Spalten 401, 402 aufzufinden. Die zwei verschiedenen Messungen ermöglichen dann bei beispielsweise gleicher Schichtdicke der Anhaftung eine Bestimmung der Schallgeschwindigkeit des anhaftenden Mediums und unter Umständen zusätzlich der Schichtdicke.

Fig. 5 zeigt ein beispielhaftes Verfahren mit den Schritten:
- Durchführen (S1) von mindestens zwei Messungen in voneinander verschiedenen Eindringtiefen im Medium durch eine Sensoreinheit 104. Beispielsweise werden kapazitive Messungen in zwei verschiedenen Tiefen im Medium von zwei in verschiedenen Lagen angeordneten Elektroden durchgeführt. Die Elektroden mögen außerdem von einer Isolationsschicht 310 umgeben sein.
- Entscheiden (S2), ob eine vollständige Bedeckung der Sensoreinheit 104 durch ein Medium oder eine Anhaftung von Teilen des Mediums an der Sensoreinheit 104 vorliegt. Beispielsweise wird ein Gleichungssystem mit zwei Unbekannten gelöst. Unbekannte Parameter sind beispielsweise die Permittivität und die Bedeckungsdicke der Sensoreinheit 104. Dazu kann zum Beispiel zuerst die unbekannte Stoffeigenschaft eliminiert werden, woraufhin die Schichtdicke berechnet wird.
- Bestimmen (S3) von physikalischen Stoffeigenschaften des Mediums durch die Recheneinheit. Nach der Berechnung der Schichtdicke kann auch der zweite unbekannte Parameter, die mindestens eine physikalische Stoffeigenschaft, ermittelt werden.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen zu sehen.

### Bezugszeichenliste

- 100: Messgerät
- 101: Oberflächenbereich
- 102: Ausgedehnterer Volumenbereich
- 103: Behälter
- 104: Sensoreinheit
- 105: Bedeckungsdicke
- 201: Messung
- 202: Messung
- 301: Elektrode
- 302: Elektrode
- 303: Gehäuse
- 304: Energieversorgung
- 305: Recheneinheit
- 310: Isolationsschicht
- 333: Achse
- 401: Sensor-Reflektor Abstand
- 402: Sensor-Reflektor Abstand
- 421: Ultraschallsender/-empfänger
- 422: Ultraschallsender/-empfänger
- 431: Reflektor
- 432: Reflektor
- S1: Durchführen
- S2: Entscheiden
- S3: Bestimmen

## Patentansprüche

1. Messgerät (100) zum Erfassen eines Füllstands oder eines Grenzstands eines Mediums, aufweisend:
eine Sensoreinheit (104), die ausgeführt ist, mindestens zwei Messungen in zwei voneinander verschiedenen Eindringtiefen im Medium durchzuführen, wobei die erste Messung in einem ersten Bereich (101) und die zweite Messung in einem in der Tiefe ausgedehnteren Volumenbereich (102) erfolgt, der den ersten Bereich beinhaltet, und
eine Recheneinheit (305), die ausgeführt ist, mit den Ergebnissen der mindestens zwei Messungen eine vollständige Bedeckung der Sensoreinheit (104) durch das Medium von einer Anhaftung von Teilen des Mediums an der Sensoreinheit (104) zu unterscheiden.

2. Messgerät (100) nach Anspruch 1,
wobei die Recheneinheit (305) weiterhin ausgeführt ist, durch Auswerten der mindestens zwei Messungen eine physikalische Stoffeigenschaft des Mediums zu bestimmen.

3. Messgerät (100) nach einem der vorhergehenden Ansprüche,
wobei die Sensoreinheit (104) mindestens zwei Sensorelemente (301, 302) aufweist, und wobei das Messgerät (100) weiterhin aufweist:
einen passiven Schirm, der ausgeführt ist, das von den mindestens zwei Sensorelementen (301, 302) vermessene Volumen weitestgehend auf den Bereich vor der Sensorfläche zu beschränken.

4. Messgerät (100) nach einem der vorhergehenden Ansprüche,
wobei das Messgerät ein Grenzstandmessgerät ist, das ausgeführt ist, einen der Zustände "mit Medium bedeckt" und "mit Medium unbedeckt" zu ermitteln.

5. Messgerät (100) nach einem der Ansprüche 1 bis 3,
wobei das Messgerät ein Füllstandmessgerät ist, das ausgeführt ist, die Höhe eines Füllgutes oder den Pegel eines Fluids in einem Behälter zu erfassen.

6. Messgerät (100) nach einem der Ansprüche 2 bis 5,
wobei die zu erfassende physikalische Medieneigenschaft die Dichte oder die relative Permittivität des Mediums ist.

7. Messgerät (100) nach einem der vorhergehenden Ansprüche,
wobei die Sensoreinheit (104) zwei Elektroden (301, 302) aufweist;
wobei die erste Elektrode (301) zur Durchführung der ersten Messung verwendet wird und die zweite Elektrode (302) zur Durchführung der zweiten Messung verwendet wird.

8. Messgerät (100) nach Anspruch 7,
wobei die Sensoreinheit (104) ausgeführt ist, eine Messung der Impedanz der Elektroden (301, 302) durchzuführen.

9. Messgerät (100) nach einem der Ansprüche 7 oder 8,
wobei die erste Elektrode (301) und die zweite Elektrode (302) rotationssymmetrisch auf der Sensoreinheit (104) angeordnet sind, und
wobei die erste Elektrode (301) und die zweite Elektrode (302) von einer Isolationsschicht (310) umgeben sind.

10. Messgerät (100) nach einem der Ansprüche 1 bis 4,
wobei die Sensoreinheit (104) als Vibrationsgrenzstandmessgerät ausgeführt ist.

11. Verfahren zum Erfassen eines Füllstands oder eines Grenzstands eines Mediums, aufweisend die Schritte:
- Durchführen (S1) von mindestens zwei Messungen in mindestens zwei voneinander verschiedenen Eindringtiefen im Medium durch eine Sensoreinheit (104), wobei die erste Messung in einem ersten Bereich (101) und die zweite Messung in einem in der Tiefe ausgedehnteren Volumenbereich (102) erfolgt, und
- Entscheiden (S2), ob eine vollständige Bedeckung der Sensoreinheit (104) durch ein Medium oder eine Anhaftung von Teilen des Mediums an der Sensoreinheit (104) vorliegt durch einen relativen Vergleich der beiden Messungen.

12. Verfahren nach Anspruch 11, weiterhin aufweisend den Schritt:
Bestimmen (S3) von einer oder mehreren physikalischen Stoffeigenschaften des Mediums durch die Recheneinheit (305).

13. Programmelement, das, wenn es auf der Recheneinheit (305) ausgeführt wird, das Messgerät (100) anleitet, das Verfahren nach einem der Ansprüche 11 oder 12 auszuführen.

14. Computerlesbares Medium, auf dem das Programmelement nach Anspruch 13 gespeichert ist.

## Claims

1. Measuring device (100) for detecting a fill level or a limit level of a medium, comprising:
a sensor unit (104) that is designed to perform at least two measurements at two different penetration depths in the medium, wherein the first measurement takes place in a first region (101) and the second measurement takes place in a volume region (102) that is more extensive in depth, which comprises the first region, and
a calculation unit (305) that is designed to use the results of the at least two measurements to distinguish a complete coverage of the sensor unit (104) by the medium from an adherence of portions of the medium to the sensor unit (104).

2. Measuring device (100) according to claim 1,
wherein the calculation unit (305) is further designed to determine a physical material characteristic of the medium by evaluating the at least two measurements.

3. Measuring device (100) according to any of the preceding claims,
wherein the sensor unit (104) comprises at least two sensor elements (301, 302), and wherein the measuring device (100) further comprises:
a passive screen that is designed to limit the volume measured by the at least two sensor elements (301, 302) as much as possible to the area in front of the sensor surface.

4. Measuring device (100) according to any of the preceding claims,
wherein the measuring device is a limit level measuring device which is designed to determine one of the states "covered with medium" and "uncovered with medium".

5. Measuring device (100) according to any of claims 1 to 3,
wherein the measuring device is a fill level measuring device that is designed to detect the level of a filling material or the level of a fluid in a container.

6. Measuring device (100) according to any of claims 2 to 5,
where the physical medium characteristic to be detected is the density or the relative permittivity of the medium.

7. Measuring device (100) according to any of the preceding claims,
wherein the sensor unit (104) comprises two electrodes (301, 302);
wherein the first electrode (301) is used to perform the first measurement and the second electrode (302) is used to perform the second measurement.

8. Measuring device (100) according to claim 7,
wherein the sensor unit (104) is designed to perform a measurement of the impedance of the electrodes (301, 302).

9. Measuring device (100) according to any of claims 7 or 8,
wherein the first electrode (301) and the second electrode (302) are arranged rotationally symmetrically on the sensor unit (104), and
wherein the first electrode (301) and the second electrode (302) are surrounded by an insulation layer (310).

10. Measuring device (100) according to any of claims 1 to 4,
wherein the sensor unit (104) is designed as vibration limit level meter.

11. Method for detecting a fill level or a limit level of a medium, comprising the steps of:
- performing (S1) at least two measurements at at least two different penetration depths in the medium by means of a sensor unit (104), wherein the first measurement takes place in a first region (101) and the second measurement takes place in a volume region (102) which is more extensive in depth, and
- deciding (S2) whether there is a complete coverage of the sensor unit (104) by a medium or an adherence of portions of the medium to the sensor unit (104) by a relative comparison of the two measurements.

12. Method according to claim 11, further comprising the step of:
determining (S3) one or a plurality of physical material characteristic of the medium by the calculation unit (305).

13. Program element, which, when executed on the calculation unit (305), instructs the measuring device (100) to perform the method according to any of claims 11 or 12.

14. Computer-readable medium, on which the program element according to claim 13 is stored.

## Revendications

1. Appareil de mesure (100) pour détecter un niveau de remplissage ou un niveau limite d'un milieu, présentant :
une unité de détection (104) qui est conçue pour effectuer au moins deux mesures à deux profondeurs de pénétration différentes dans le milieu, la première mesure étant effectuée dans une première zone (101) et la deuxième mesure dans une zone de volume plus étendue en profondeur (102), qui contient la première zone, et
une unité de calcul (305) qui est conçue pour utiliser les résultats desdites au moins deux mesures pour distinguer un recouvrement complet de l'unité de détection (104) par le milieu d'une l'adhérence de parties du milieu à l'unité de détection (104).

2. Appareil de mesure (100) selon la revendication 1,
dans lequel l'unité de calcul (305) est en outre conçue pour déterminer une propriété matérielle physique du milieu en évaluant lesdites au moins deux mesures.

3. Appareil de mesure (100) selon l'une des revendications précédentes,
dans lequel l'unité de détection (104) présente au moins deux éléments de détection (301, 302) et dans lequel l'appareil de mesure (100) présente en outre :
un écran passif qui est conçu pour limiter autant que possible le volume mesuré par lesdits au moins deux éléments de détection (301, 302) à la zone située devant la surface de détection.

4. Appareil de mesure (100) selon l'une des revendications précédentes,
dans lequel l'appareil de mesure est un appareil de mesure de niveau limite qui est conçu pour déterminer l'un des états « recouvert de milieu » et « non recouvert de milieu ».

5. Appareil de mesure (100) selon l'une des revendications 1 à 3,
dans lequel l'appareil de mesure est un appareil de mesure de niveau de remplissage qui est conçu pour détecter la hauteur d'un produit de remplissage ou le niveau d'un fluide dans un récipient.

6. Appareil de mesure (100) selon l'une des revendications 2 à 5,
dans lequel la propriété physique du milieu à détecter est la densité ou la permittivité relative du milieu.

7. Appareil de mesure (100) selon l'une des revendications précédentes,
dans lequel l'unité de détection (104) présente deux électrodes (301, 302) ;
dans lequel la première électrode (301) est utilisée pour effectuer la première mesure et la deuxième électrode (302) est utilisée pour effectuer la deuxième mesure.

8. Appareil de mesure (100) selon la revendication 7,
dans lequel l'unité de détection (104) est conçue pour effectuer une mesure de l'impédance des électrodes (301, 302).

9. Appareil de mesure (100) selon l'une des revendications 7 ou 8,
dans lequel la première électrode (301) et la deuxième électrode (302) sont disposées avec une symétrie de rotation sur l'unité de détection (104) et
dans lequel la première électrode (301) et la deuxième électrode (302) sont entourées d'une couche d'isolation (310).

10. Appareil de mesure (100) selon l'une des revendications 1 à 4,
dans lequel l'unité de détection (104) est réalisée sous la forme d'un appareil de mesure de niveau de remplissage à vibrations.

11. Procédé pour détecter un niveau de remplissage ou un niveau limite d'un milieu, présentant les étapes consistant à :
- effectuer (S1) au moins deux mesures à au moins deux profondeurs de pénétration différentes dans le milieu par une unité de détection (104), la première mesure étant effectuée dans une première zone (101) et la deuxième mesure étant effectuée dans une zone de volume plus étendue en profondeur (102) et
- décider (S2), par une comparaison relative des deux mesures, s'il existe un recouvrement complet de l'unité de détection (104) par un milieu ou une adhérence de parties du milieu à l'unité de détection (104).

12. Procédé selon la revendication 11, présentant en outre l'étape consistant à :
déterminer (S3) une ou plusieurs propriétés matérielles physiques du milieu par l'unité de calcul (305).

13. Élément de programme qui, lorsqu'il est exécuté sur l'unité de calcul (305), amène l'appareil de mesure (100) à exécuter le procédé selon l'une des revendications 11 ou 12.

14. Support lisible par ordinateur sur lequel l'élément de programme selon la revendication 13 est stocké.
